# EUROPÄISCHE PATENTANMELDUNG

(11) **EP 2 684 674 A1**
(43) Veröffentlichungstag der Anmeldung: **15.01.2014**
(21) Anmeldenummer: 13175062.2
(22) Anmeldetag: 04.07.2013
(51) Int. Cl.: B29C 49/46, B29C 49/64, B29C 49/42

(54) **Vorrichtung und Verfahren zum Erwärmen von Kunststoffvorformlingen mit Sterilraum**

(30) Priorität: 13.07.2012 DE 102012106308
(71) Anmelder: Krones AG, 93073 Neutraubling (DE)
(72) Erfinder: Schönberger, Wolfgang, 93073 Neutraubling (DE); Schwöd, Gerhard, 93073 Neutraubling (DE)
(74) Vertreter: Bittner, Bernhard

(57) **Zusammenfassung**

Eine Vorrichtung (1) zum Erwärmen von Kunststoffvorformlingen (10) mit einem bewegbaren Träger (2), an dem wenigstens eine Erwärmungseinrichtung (20) angeordnet ist, wobei diese Erwärmungseinrichtung (20) ein Halteelement (22) zum Halten und Transportieren der Kunststoffvorformlinge (10) sowie eine Erwärmungskavität (30), in welche der Kunststoffvorformling (10) einführbar ist, aufweist und wobei eine Bewegungseinrichtung (24) vorgesehen ist, welche geeignet ist, den Kunststoffvorformling (10) in die Erwärmungskavität (30) einzuführen. Erfindungsgemäß weist die Vorrichtung (1) einen Reinraum (6) auf, innerhalb dessen die Kunststoffvorformlinge (10) mittels der Erwärmungskavitäten (30) erwärmbar sind, wobei dieser Reinraum (6) von wenigstens einer ersten Wandung (62) und wenigstens einer zweiten Wandung (64), welche beweglich gegenüber der ersten Wandung (62) ausgeführt ist, gegenüber einer Umgebung (U) abgegrenzt ist.

## Beschreibung

Die vorliegende Erfindung bezieht sich auf eine Vorrichtung zum Erwärmen von Kunststoffvorformlingen. Aus dem Stand der Technik ist es bekannt, dass Kunststoffvorformlinge in Blasmaschinen zu Kunststoffflaschen umgeformt werden. Zu diesem Zweck werden diese Kunststoffvorformlinge üblicherweise zunächst in einem Ofen erwärmt. Dabei sind sowohl Öfen bekannt, durch welche hindurch die Kunststoffvorformlinge transportiert werden, wobei beispielsweise die Kunststoffvorformlinge an Heizelementen vorbeitransportiert werden, als auch solche Öfen, welche einzelne Erwärmungsstationen zum Erwärmen der Kunststoffvorformlinge aufweisen. Die DE 10 2009 047 537 A1 beschreibt einen derartigen Ofen zum Konditionieren von Vorformlingen.

Für viele Getränke ist es erforderlich, diese unter aseptischen Bedingungen abzufüllen. Dabei ist bekannt, dass ein Sterilisationsprozess vor der Blasmaschine eventuell keimbehaftete Vorformlinge sterilisiert. Danach kann über eine aseptische Blasmaschine das Behältnis dem aseptischen Abfüllen übergeben werden.

Der vorliegenden Erfindung liegt die Aufgabe zugrunde, eine Vorrichtung und ein Verfahren zur Verfügung zu stellen, welche die Herstellung von unter aseptischen Bedingungen abgefüllten Behältnissen erleichtern. Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist einen bewegbaren Träger auf, an dem wenigstens eine Erwärmungseinrichtung angeordnet ist. Diese Erwärmungseinrichtung weist dabei ein Halteelement zum Halten und Transportieren der Kunststoffvorformlinge auf, sowie auch eine Erwärmungskavität, in welche der Kunststoffvorformling einführbar ist. Weiterhin ist eine Bewegungseinrichtung vorgesehen, welche geeignet ist, den Kunststoffvorformling in diese Erwärmungskavität einzuführen und bevorzugt auch um den Kunststoffvorformling wieder aus der Erwärmungskavität auszuführen. Dabei ist vorteilhaft wenigstens ein Abschnitt dieser Erwärmungskavität beheizbar und/oder mit Mikrowellen beaufschlagbar bzw. es sind Mikrowellen in die Erwärmungskavität zur Erwärmung der Kunststoffvorformlinge einbringbar.

Erfindungsgemäß weist die Vorrichtung einen Reinraum auf, innerhalb dessen die Kunststoffvorformlinge mittels der Erwärmungskavitäten erwärmbar sind und dieser Reinraum ist von wenigstens einer ersten Wandung und wenigstens einer zweiten Wandung, welche beweglich gegenüber der ersten Wandung ausgeführt ist, gegenüber einer Umgebung abgegrenzt.

Es wird daher vorgeschlagen, einen Behandlungsraum vorzusehen, in welchem der Kunststoffvorformling erwärmt wird, wobei dieser Behandlungsraum derart gestaltet ist, dass ein Reinraum entsteht, der nach außen hin zu einem unsterilen Raum abgegrenzt ist und gleichwohl vorteilhaft die Einbringung der erforderlichen Prozessbewegungen zulässt, ohne dabei seine Sterilität zu verlieren.

Vorteilhaft erfolgt die gesamte Erwärmung der Kunststoffvorformlinge in dem besagten Reinraum.

Bevorzugt bewegen sich auch die erwähnten Erwärmungskavitäten mit den Kunststoffvorformlingen mit. Vorteilhaft sind dabei die Erwärmungskavitäten derart bemessen, dass jeweils ein Kunststoffvorformling in diese eingeführt wird. Es wäre jedoch auch möglich, mehrere Kunststoffvorformlinge gleichzeitig in die Erwärmungskavitäten einzuführen, so dass auf diese Weise mehrere Kunststoffvorformlinge gleichzeitig in der gleichen Kavität erwärmt werden.

Bei einer weiteren vorteilhaften Ausführungsform weist die Vorrichtung eine Dichtungseinrichtung auf, um insbesondere die beiden oben erwähnten Wandungen gegeneinander abzudichten. Vorteilhaft handelt es sich bei dieser Dichtungseinrichtung um ein sogenanntes Wasserschloss. Dies bedeutet, dass die Dichtungseinrichtung bevorzugt einen umlaufenden mit einer Flüssigkeit gefüllten Kanal aufweist, in welchem ein Element der jeweils relativ beweglichen Wandung in der Art eines Schwertes eintaucht. Es wäre jedoch auch denkbar, den Kanal drehbar anzuordnen.

Bei einer weiteren vorteilhaften Ausführungsform weist die Vorrichtung ein Druckbeaufschlagungsmittel auf, um den Reinraum mit einem Überdruck zu beaufschlagen. So kann beispielsweise dem Reinraum ein Überdruck an Sterilluft zugeführt werden, so dass verhindert wird, dass nicht sterile Luft von außen in den Reinraum gelangt.

Bei einer weiteren vorteilhaften Ausführungsform ist der Träger ein drehbarer Träger. Damit ist vorteilhaft die Erwärmungskavität an diesem drehbaren Träger angeordnet. Vorteilhaft ist eine Vielzahl derartiger Erwärmungskavitäten an einem drehbaren Träger angeordnet. Damit ist hier vorteilhaft auch ein Rotationsantrieb für die Bewegung der Kunststoffvorformlinge vorgesehen. Vorteilhaft ist der Reinraum ringförmig bzw. torusförmig ausgebildet. Besonders bevorzugt bildet der Träger ebenfalls eine Begrenzungswandung des Reinraums aus. Bevorzugt ist eine Antriebseinrichtung zum Antreiben des Trägers außerhalb des Reinraums angeordnet. Allgemein ist bevorzugt wenigstens ein Bereich der Vorrichtung, der radial innerhalb des Transportpfads der Kunststoffvorformlinge bzw. der Erwärmungskavitäten liegt, außerhalb des Reinraums angeordnet. Auf diese Weise kann der Reinraum mit einem relativ kleinen Volumen ausgeführt werden.

Vorteilhaft handelt es sich bei der Vorrichtung um einen STIR- bzw. um einen Infrarotofen, es wäre jedoch auch möglich, dass die Vorrichtung eine oder mehrere Mikrowellenerzeugungseinrichtungen aufweist und damit die Kunststoffvorformlinge unter Einsatz von Mikrowellen erwärmt werden. Daneben könnten auch eine Infraroterwärmung und eine Mikrowellenerwärmung miteinander kombiniert werden.

Bei einer weiteren vorteilhaften Ausführungsform werden die einzelnen Erwärmungskavitäten elektrisch beheizt bzw. erwärmt. Es wäre jedoch auch eine Erwärmung mit einer Flüssigkeit, beispielsweise mit heißem Öl, möglich.

Bei einer weiteren vorteilhaften Ausführungsform weist die Vorrichtung einen stangenartigen Körper auf, der wenigstens zeitweise während einer Erwärmung der Kunststoffvorformlinge durch eine Mündung der Kunststoffvorformlinge in deren Innenraum einführbar ist. Es wird damit bei dieser Ausführungsform eine Art Duplexheizverfahren vorgeschlagen, wobei bevorzugt gleichzeitig von innen über die besagte Stange bzw. Heizlanze und von au ßen über die Heizbuchse bzw. Erwärmungskavität erwärmt wird. Wie erwähnt, ist dieses Heizsystem vorteilhaft auf einem Rundläufer angeordnet. Durch diesen können die Kunststoffvorformlinge zugeführt werden, an die oben erwähnte Halte- bzw. Trageinrichtung zum Halten übergeben werden und anschließend in die Erwärmungskavität eingetaucht werden. Parallel dazu wird auch die besagte Heizlanze bzw. der stangenartige Körper in den Kunststoffvorformling eingefahren.

Der Kunststoffvorformling verweilt nun eine bestimmte Aufheizdauer in diesem Heizsystem, wobei er vorteilhaft kontinuierlich in Drehung um seine Längsrichtung versetzt wird, um so auch eine gleichmäßige Erwärmung um den Umfang des Kunststoffvorformlings zu erreichen. Nach dem Aufheizprozess wird der Vorformling wieder aus der Erwärmungskavität gezogen und an eine Blasmaschine übergeben.

Bei einer weiteren vorteilhaften Ausführungsform ist der stangenartige Körper erwärmbar. Dies bedeutet, dass der Kunststoffvorformling hier vorteilhaft von zwei Seiten, nämlich einerseits durch den stangenartigen Körper und andererseits durch die den Vorformling umgebende Wandung der Erwärmungskavität erwärmt wird.

Bei einer vorteilhaften Ausführungsform weist die Erwärmungskavität eine erste Öffnung auf, über welche der Kunststoffvorformling der Erwärmungskavität zuführbar ist, sowie wenigstens eine zweite Öffnung, welche von der ersten Öffnung beabstandet ist. Vorteilhaft ist dabei diese zweite Öffnung an einem bezüglich der ersten Öffnung gegenüberliegenden Ende der Erwärmungskavität angeordnet. Vorteilhaft befindet sich diese zweite Öffnung an einem tiefsten Punkt der Kavität, so dass insbesondere zu Reinigungszwecken ein Reinigungsmittel ablaufen kann.

Bei einer vorteilhaften Ausführungsform ist die Erwärmungskavität in einem Bodenbereich verschlossen und damit topfartig ausgeführt. In diesem Falle kann die Erwärmungskavität auch den Kunststoffvorformling selbst vor Keimen abschirmen. Dabei ist es auch möglich, dass die oben erwähnte Öffnung im Boden vorgesehen ist, diese jedoch verschlossen werden kann.

Vorteilhaft ist die Erwärmungskavität in eine Richtung und insbesondere nach oben hin offen (zur Preform-Beladung) und in dieser Richtung vorteilhaft durch einen ("oberen") Isolationsraum") abgeschlossen.

Bei einer weiteren vorteilhaften Ausführungsform kann wie oben erwähnt der Boden der Erwärmungskavität geöffnet werden, um ein Reinigen (Cippen, Spülen, Begasen) des Heizsystems zu ermöglichen. Nach dem Reinigungsvorgang kann die Öffnung wieder - beispielsweise mit einer Cipkappe - verschlossen werden.

Bei einer weiteren vorteilhaften Ausführungsform weist die Vorrichtung eine Leitung zum Leiten eines fließfähigen Mediums auf, welche in Strömungsverbindung mit der zweiten Öffnung bringbar ist. Insbesondere kann hierüber eine Flüssigkeit und insbesondere ein Reinigungsflüssigkeit zugeführt werden.

Dabei wäre es auch möglich, dass mehrere Erwärmungskavitäten von einer Reinigungsleitung versorgt werden. So kann beispielsweise eine Zentralleitung vorgesehen sein, in welche einzelne Leitungen, welche zu den Erwärmungskavitäten führen, münden können. Auf diese Weise ist es möglich, alle Erwärmungskavitäten bzw. Heizsysteme auf einmal zu spülen und zu begasen. Dabei wäre beispielsweise auch eine Begasung mit Wasserstoffperoxid denkbar. Bei einer weiteren vorteilhaften Ausführungsform weist die Erwärmungskavität eine den Kunststoffvorformling in einer Umfangsrichtung vollständig umschließende Wandung sowie eine Bodenwandung auf. Diese Wandungen können auch (beispielsweise über gekrümmte Bereiche) ineinander übergehen.

In dieser Ausführungsform ist, wie oben erwähnt, die Erwärmungskavität zumindest weitgehend topfartig ausgebildet. Bei dieser Ausführungsform wird der Kunststoffvorformling also nicht durch gegenüberliegende Heizeinrichtungen gefahren, wie im Stand der Technik üblich, sondern befindet sich in einer ihn vollständig umgebenden Kammer. Vorteilhaft ist eine Bewegungseinrichtung, welche den Kunststoffvorformling in die Erwärmungskavität einführt, so gestaltet, dass das Gewinde des Kunststoffvorformlings selbst nicht in die Erwärmungskavität eingefahren wird. Daneben können Abschirmelemente vorgesehen sein, welche eine Erwärmung des Mündungsbereiches des Kunststoffvorformlings verhindern.

Bei einer weiteren vorteilhaften Ausführungsform ist die Bodenwandung als Reflektor ausgebildet. Auf diese Weise kann auf die Bodenwandung gelangende Strahlung auf den Kunststoffvorformling reflektiert werden und damit diesen weiter erwärmen. Bei dieser Ausführungsform ist dabei die Bodenwandung selbst nicht beheizbar. Es wäre jedoch auch möglich, dass die Bodenwandung beheizbar ist.

Bei einer vorteilhaften Ausführungsform weist die Bewegungseinrichtung, welche den Kunststoffvorformling in die Erwärmungskavität einführt, einen Elektromotor und insbesondere einen Linearmotor auf.

Bei einer weiteren bevorzugten Ausführungsform ist auch eine Bewegungseinrichtung vorgesehen, welche den oben erwähnten stangenartigen Körper in die Kunststoffvorformlinge einführt. Auch diese Bewegungseinrichtung weist dabei bevorzugt einen Elektromotor und besonders bevorzugt einen Linearmotor auf. Vorteilhaft bewegt die Bewegungseinrichtung die Bodenwandung in einer Längsrichtung der Kunststoffvorformlinge und bevorzugt in einer Richtung, welche senkrecht zu einer Transportebene der Erwärmungskavitäten steht.

Bei einer weiteren vorteilhaften Ausführungsform ist die Bodenwandung gegenüber der erwähnten vollständig umschließenden Wandung beweglich. Insbesondere ist dabei die Bodenwandung in einer geraden Richtung beweglich und insbesondere in derjenigen Richtung, in der auch der Kunststoffvorformling bewegt wird. Insbesondere ist die Bodenwandung in der Längsrichtung des Kunststoffvorformlings bewegbar. Auf diese Weise kann eine Einstellung der Erwärmungskavität auf unterschiedliche Größen von Kunststoffvorformlingen erreicht werden.

Bei einer weiteren vorteilhaften Ausführungsform ist wenigstens ein Faltenbalg als Abdichtungseinrichtung vorgesehen, um wenigstens eine in der Vorrichtung auftretende Relativbewegung abzudichten. Dabei kann es sich insbesondere um die Bewegung der Kunststoffvorformlinge gegenüber der Erwärmungskavität handeln, aber es wäre auch denkbar, dass ein Faltenbalg vorgesehen ist, um die Bewegung des oben erwähnten stangenförmigen Körpers und/oder des Bodenteils abzudichten.

Bei einer weiteren vorteilhaften Ausführungsform ist wenigstens eine Innenwandung der Erwärmungskavität auf eine Temperatur erwärmbar, welche größer ist als 500 °C, bevorzugt >600 °C, bevorzugt >700 °C. Aufgrund dieser hohen Betriebstemperatur sind die jeweiligen Oberflächen der Erwärmungskavität bzw. der Heizelemente als keimfrei anzusehen.

Bei einer weiteren vorteilhaften Ausführungsform ist das oben erwähnte Haltelement zum Halten der Kunststoffvorformlinge wenigstens abschnittsweise als Hohlwelle ausgestaltet. Durch diese Ausgestaltung als Hohlwelle kann durch das Halteelement hindurch die Stange auch in die Kunststoffvorformlinge eingeführt werden. Es wäre jedoch auch möglich, dass die Haltelemente die Kunststoffvorformlinge außen an ihrem Gewinde fassen und somit der vollständige Mündungsquerschnitt zum Einführen des stangenartigen Körpers in die Kunststoffvorformlinge zur Verfügung steht.

Die vorliegende Erfindung ist weiterhin auf ein Verfahren zum Erwärmen von Kunststoffvorformlingen gerichtet, wobei die Kunststoffvorformlinge entlang eines vorgegebenen Transportpfades transportiert werden und während dieses Transportes erwärmt werden. Dabei werden die Kunststoffvorformlinge jeweils in Erwärmungskavitäten eingeführt und in diesen Erwärmungskavitäten erwärmt, so dass jeder zu erwärmende Kunststoffvorformling (genau) einer Erwärmungskavität zugeordnet ist und die Erwärmungskavitäten wenigstens abschnittsweise entlang des Transportpfades bewegt werden. Dabei wird zum Erwärmen der Kunststoffvorformlinge vorteilhaft wenigstens ein Abschnitt der Erwärmungskavität beheizt oder es werden durch ein Mikrowellenausgabeelement Mikrowellen in die Erwärmungskavität eingebracht.

Erfindungsgemäß werden die Kunststoffvorformlinge wenigstens zeitweise während ihrer Erwärmung innerhalb eines Reinraumes transportiert, wobei dieser Reinraum von wenigstens einer ersten Wandung und wenigstens einer zweiten Wandung, welche beweglich gegenüber der ersten Wandung ausgeführt ist, gegenüber einer Umgebung abgegrenzt wird.

Es wird daher auch verfahrensseitig vorgeschlagen, mittels den Kunststoffvorformlingen jeweils zugeordneten Erwärmungskavitäten deren Erwärmung herbeizuführen und weiterhin diese Erwärmung unter sterilen Bedingungen durchzuführen.

Bei einem bevorzugten Verfahren wird während des Erwärmungsvorganges wenigstens zeitweise ein stangenförmiges Element bzw. ein stangenartiger Körper in die Kunststoffvorformlinge eingeführt. Vorteilhaft werden die Kunststoffvorformlinge während ihrer Erwärmung entlang eines kreisförmigen Pfades transportiert.

Weitere Vorteile und Ausführungsformen ergeben sich aus den beigefügten Figuren:

Darin zeigen:
- Fig. 1: eine schematische Darstellung einer Anlage zum Behandeln von Behältnissen;
- Fig. 2: eine Detailansicht einer Erwärmungseinrichtung;
- Fig. 3: eine Detailansicht einer Erwärmungseinrichtung;
- Fig. 4: eine Darstellung mehrerer Erwärmungseinrichtungen;
- Fig. 5: eine Darstellung einer Erwärmungseinrichtung mit verschiebbarem Bodenteil;
- Fig. 6: eine weitere Darstellung einer erfindungsgemäßen Erwärmungseinrichtung; und;
- Fig. 7: eine Darstellung der in Fig. 6 gezeigten Erwärmungsvorrichtung ein einem anderen Betriebszustand.

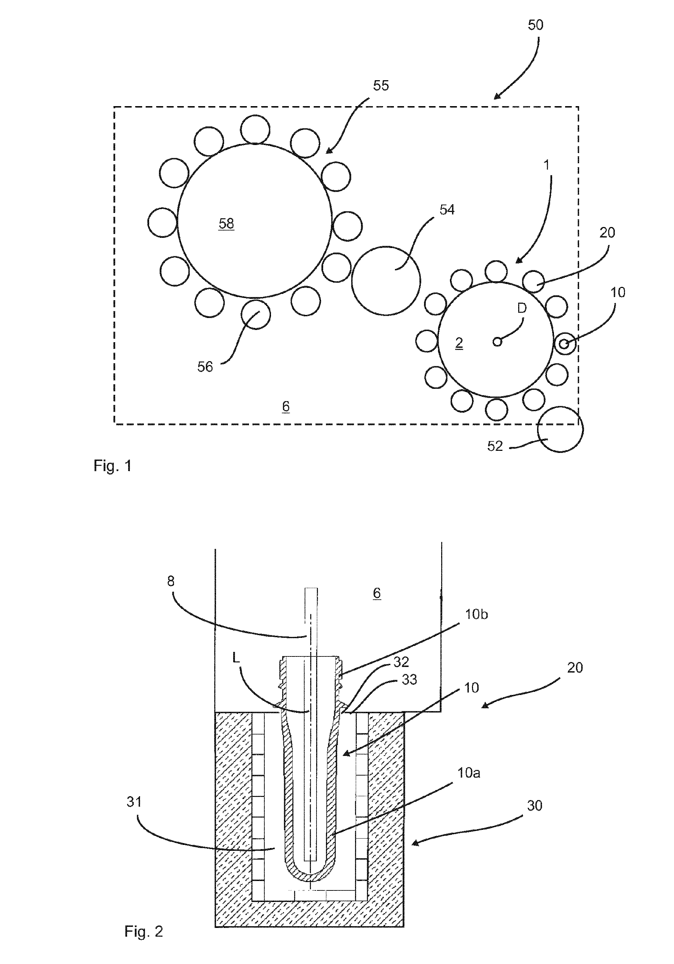

Figur 1 zeigt eine schematische Darstellung einer Anlage 50 zum Behandeln von Behältnissen. Dabei werden Kunststoffvorformlinge 10 (nur einer dargestellt) über eine Zuführeinrichtung 52 einer in ihrer Gesamtheit mit 1 bezeichneten Erwärmungsvorrichtung zugeführt. Diese Erwärmungsvorrichtung weist einen hier einen um eine Drehachse D drehbaren Träger 2 auf, an dem eine Vielzahl von Erwärmungseinrichtungen bzw. -stationen 20 angeordnet ist. Nach ihrer Erwärmung werden die Kunststoffvorformlinge über einen Zuführstern 54 an eine in ihrer Gesamtheit mit 55 bezeichnete Umformungseinrichtung zum Umformen von Kunststoffvorformlingen zu Kunststoffbehältnissen übergeben. Auch diese Umformungseinrichtung weist einen drehbaren Träger 58 und eine Vielzahl von daran angeordneten Umformungsstationen 56 auf. Dabei handelt es sich vorteilhaft bei der Umformungseinrichtung 55 um eine Blasformmaschine und insbesondere um eine Streckblasmaschine.

Sowohl die Erwärmungseinrichtung 1 als auch die Umformungseinrichtung 55 sind hier in einem nur schematisch dargestellten Reinraum 6 angeordnet. Dies bedeutet, dass die Kunststoffvorformlinge bereits während ihrer Erwärmung innerhalb dieses Reinraumes 6 transportiert werden. Weiterhin wäre es denkbar, dass die Anlage beispielsweise Sterilisationseinrichtungen aufweist, welche die Erwärmungseinrichtungen 20 oder auch die Kunststoffvorformlinge 10 selbst sterilisieren. Die Zuführeinrichtung 52 kann dabei auch zumindest abschnittsweise in dem Reinraum 6 angeordnet sein.

Figur 2 zeigt eine teilweise Darstellung einer Erwärmungseinrichtung 20. Diese Erwärmungseinrichtung weist eine in ihrer Gesamtheit mit 30 gekennzeichnete Erwärmungskavität auf, welche einen Hohlraum 31 ausbildet, in den der Kunststoffvorformling 10 eingeführt wird. Dieser Kunststoffvorformling 10 weist dabei einen Grundkörper 10a auf, sowie einen Gewindebereich 10b. Dieser Gewindebereich gelangt während der Erwärmung nicht in die Erwärmungskavität 30. Vielmehr ist es denkbar, dass Abschirmeinrichtungen 33 vorgesehen sind, welche eine Erwärmung des Gewindes verhindern. Das Bezugszeichen 32 kennzeichnet eine Öffnung der Erwärmungskavität 30, über die der Kunststoffvorformling 10 der Erwärmungskavität 30 zugeführt werden kann. Jede Abschirmeinrichtung 33 kann dabei als Platte ausgeführt sein, welche wiederum eine Öffnung aufweist, durch welche der Kunststoffvorformlinge 10 hindurchführbar ist.

Das Bezugszeichen 8 kennzeichnet einen stangenartigen Körper, der ebenfalls hier während der Erwärmung in die Kunststoffvorformlinge 10 eingeführt wird. Auch dieser stangenartige Körper 8 erwärmt die Kunststoffvorformlinge 10 von innen. Auf diese Weise ist eine gleichmäßige Erwärmung der Kunststoffvorformlinge 10 möglich. Das Bezugszeichen L kennzeichnet die Längsrichtung der Kunststoffvorformlinge, welche hier mit der Längsrichtung und Bewegungsrichtung des stangenartigen Körpers zusammenfällt.

Das Bezugszeichen 6 kennzeichnet auch hier wieder den Reinraum, innerhalb dessen die Kunststoffvorformlinge erwärmt werden. Da die Erwärmungskavität 30 hier ebenfalls abgeschlossen ist, bildet auch der Hohlraum 31 einen Teil des Reinraumes 6.

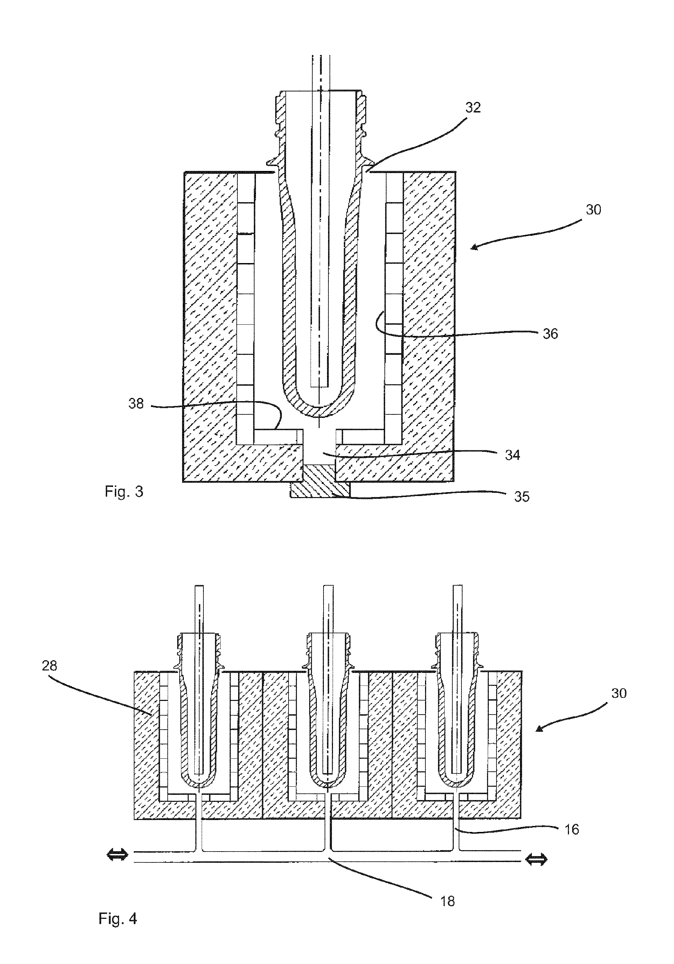

Figur 3 zeigt eine weitere Ausführungsform einer Erwärmungskavität 30. Dabei sind Innenwandungen 36 dargestellt, welche den Kunststoffvorformling 10 in seiner Umfangsrichtung hier vollständig umgeben. Bevorzugt weist diese Innenwandung einen kreisförmigen Querschnitt auf (d.h. der Hohlraum 31 weist eine abschnittsweise zylindrische Form auf), damit im Wesentlichen ein gleichförmiger Abstand zu dem Kunststoffvorformling 10 gehalten wird und dieser so gleichmäßig erwärmt wird. Weiterhin ist es möglich, dass der Kunststoffvorformling 10 zur gleichmäßigen Erwärmung um seine Längsachse gedreht wird. Es wäre jedoch auch möglich, dass die Erwärmung mit der Erwärmungskavität bewusst ein in Umfangsrichtung abweichendes Profil aufweist, beispielsweise, um Behältnisse zu formen, welche eine von einer kreisförmigen Gestalt abweichende Gestalt aufweisen.

Das Bezugszeichen 34 bezieht sich auf eine Öffnung, über welche beispielsweise in Sterilisationsmittel zum Reinigen der Innenwandungen eingeführt und/oder ausgeführt werden kann. Das Bezugszeichen 38 kennzeichnet einen Bodenbereich der Erwärmungskavität. Die Öffnung 34 kann mittels einer Verschlusseinrichtung 35 verschlossen werden, insbesondere, um den Sterilraum 6 aufrecht zu erhalten.

Figur 4 zeigt eine weitere Ausgestaltung der vorliegenden Erfindung. Hier sind drei nebeneinander angeordnete Erwärmungskavitäten 30 dargestellt, in denen sich jeweils Kunststoffvorformlinge 10 befinden. Das Bezugszeichen 16 kennzeichnet eine Leitungseinrichtung, über welche ein Sterilisationsmittel den einzelnen Erwärmungskavitäten zugeführt wird oder von diesen abgeführt werden kann. Dabei ist es möglich, dass diese einzelnen Leitungen 16 miteinander verbunden sind und in eine Zentralleitung 18 münden. Diese Leitung 18 kann dabei als Ringkanal ausgestaltet sein. Der Innenraum 31 ist dabei hier gleichzeitig ein unterer steriler Raum, an den sich der in Figur 1 gezeigte obere sterile Raum anschließt. Gemeinsam bilden diese Räume den Reinraum 6.

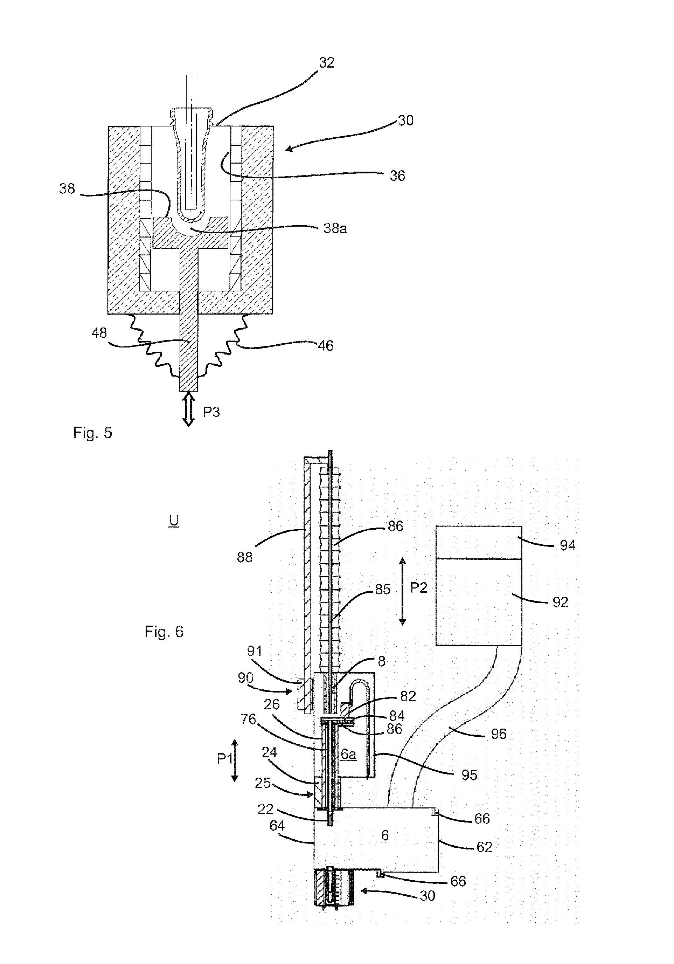

Figur 5 zeigt eine weitere Darstellungsform einer Erwärmungskavität 30. Auch hier ist wieder die umlaufende Wandung 36 dargestellt, sowie die Bodenwandung 38. Diese Bodenwandung 38 ist hier jedoch in der Richtung P3 beweglich und an einem Träger 48 angeordnet. Das Bezugszeichen 46 kennzeichnet eine Dichtungseinrichtung wie einen Faltenbalg, der die Bewegung des Bodenteiles 38 in der Richtung P3 abdichtet. Durch diese Verschiebbarkeit des Bodenteiles 38 kann eine Anpassung der Erwärmungskavität auf unterschiedliche Vorformling-Größen erreicht werden. Dabei kann der Bodenabschnitt eine Ausnehmung 38a aufweisen. Auf diese Weise kann insbesondere die Erwärmung des Bodenabschnittes des Kunststoffvorformlings verbessert werden, da dieser Bereich, wie in Fig. 5 gezeigt angepasst umgeben werden kann. Diese Ausnehmung 38a kann auch unabhängig von der Bewegbarkeit der Bodenwandung vorgesehen sein.

Figur 6 zeigt eine weitere Darstellung der erfindungsgemäßen Vorrichtung. Hierbei ist wiederum die Erwärmungseinrichtung 30 sowie der sich daran anschließende Reinraum 6 erkennbar. Dieser Reinraum 6 ist hier vorteilhaft ringförmig ausgebildet und weist eine erste Wandung 62 sowie eine zweite Wandung 64 auf. Diese zweite Wandung 64 ist dabei beweglich bzw. drehbar angeordnet und die Wandung 62 stationär. Die Bezugszeichen 66 beziehen sich auf Dichtungseinrichtungen, welche die Bewegung zwischen den Wandungen abdichten. Diese Dichtungseinrichtungen sind dabei, wie oben erwähnt, jeweils als sogenanntes Wasserschloss ausgeführt, wobei ein Abschnitt der Wandung 64 in einen von der Wandung 62 ausgebildeten Kanal eingreift. In dem Sterilraum 6 herrscht dabei bevorzugt ein Überdruck, um ein Eindringen von Keimen zu verhindern. Weiterhin ist ein Gebläse 92 vorgesehen, um über eine Leitung 96 den Sterilraum 6 zu versorgen. Das Bezugszeichen 94 kennzeichnet eine Filtereinrichtung, wie etwa einen Hepa-Filter.

Das Bezugszeichen 24 kennzeichnet einen Stator eines Linearmotors 25, der zur Bewegung der Kunststoffvorformlinge in die Erwärmungskavität 30 (sowie zur Bewegung aus der Erwärmungskavität heraus) dient. Das zugehörige bewegliche Teil bzw. Sekundärteil, d.h. der Läufer, ist hier mit dem Bezugszeichen 26 gekennzeichnet. Dieser Läufer 26 ist dabei als Hohlwelle ausgeführt, so dass durch diese Hohlwelle hindurch auch noch der stangenartige Körper 8 in den Kunststoffvorformling eingeführt werden kann.

Das Bezugszeichen 22 kennzeichnet eine Halteeinrichtung zum Halten der Kunststoffvorformlinge 10. Diese Halteeinrichtung ist hier bevorzugt als Haltedorn ausgeführt, welche in die Mündungen der Kunststoffvorformlinge eingreift und diese so von Innen her hält. Es wären jedoch auch Halteeinrichtungen denkbar, welche die Kunststoffbehältnisse von aussen her greifen. Es wäre jedoch auch denkbar, dass der stangenartige Körper 8, der in die Kunststoffvorformlinge einführbar ist, unmittelbar an der Halteeinrichtung angeordnet ist. So könnte die Halteeinrichtung als langgestreckter Dorn ausgeführt sein, welche einen Abschnitt aufweist, der in die Kunststoffvorformlinge einführbar ist sowie einen Abschnitt, der die Kunststoffvorformlinge hält.

Das Bezugszeichen 90 kennzeichnet einen zweiten elektromotorischen Antrieb bzw. das Bezugszeichen 91 dessen Stator. Das Bezugszeichen 88 kennzeichnet den Läufer dieser zweiten Antriebseinrichtung 90. Dieser Läufer 88 bewegt dabei eine Trägerstange 85 ebenfalls in der Richtung P2. Das Bezugszeichen 86 kennzeichnet einen Faltenbalg, der diese Bewegung des Trägers 85 in der Richtung P2 gegenüber der Umgebung U abdichtet. Anstelle der Linearmotoren können auch andere Antriebsarten zum Einsatz kommen wie etwa pneumatische oder hyrdraulische Antriebe oder auch sonstige Elektromotoren. Das Bezugszeichen 82 kennzeichnet einen Antrieb, insbesondere einen Elektromotor, der eine Drehbewegung des Kunststoffvorformlings um dessen Längsachse d.h. die Längsrichtung L erzeugt. Dieser Antrieb 82 kann dabei ein Abtriebsrad 84 aufweisen, welches ein an dem an einer Träger 76 angeordnetes Zahnrad 86 antreibt. An diesem Träger 76 ist wiederum die Halteeinrichtung 22 zum Halten der Kunststoffvorformlinge 10 angeordnet und dreht sich daher mit.

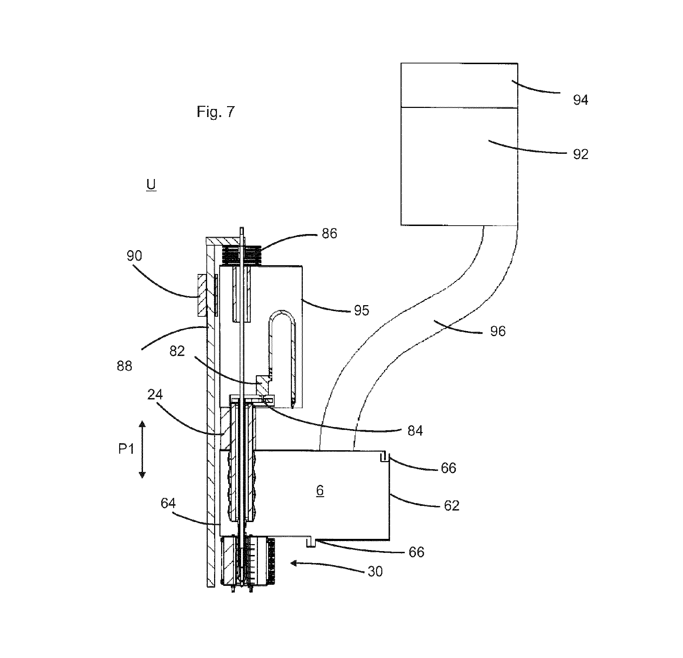

Figur 7 zeigt die Vorrichtung aus Figur 6 in einem Arbeitszustand. Dies bedeutet, dass hier der Kunststoffvorformling in die Erwärmungskavität 30 eingefahren ist und auch der stangenartige Körper 8 wiederum in den Kunststoffvorformling 10 eingefahren ist. Entsprechend ist der Faltenbalg 86 in einem zusammengedrückten Zustand und auch der Antrieb 82, der für eine Drehbewegung des Kunststoffvorformlings um seine Längsachse dient, ist in der unteren Position. Das Bezugszeichen 95 kennzeichnet ein Gehäuse, welches hier als oberer Reinraumabschnitt 6a für die Vorrichtung dient. Bei Bedarf wäre es auch möglich, die Motoreinheit 90, 88 abzuschalten, so dass bei dieser Ausgestaltung dann der Stangenkörper 22 nicht in den Kunststoffvorformling 10 eingeführt wird, sondern lediglich der Kunststoffvorformling 10 selbst in die Erwärmungskavität 30 eingeführt wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung zum Erwärmen von Kunststoffvorformlingen 10
- 6: Reinraum
- 6a: Abschnitt des Reinraums
- 8: stangenartiger Körper
- 10: Kunststoffvorformling
- 10a: Grundkörper
- 10b: Gewindebereich
- 16: Leitungseinrichtung
- 18: Zentralleitung
- 20: Erwärmungseinrichtung
- 22: Halteeinrichtung
- 24: Stator des Linearmotors 25
- 25: Linearmotor
- 26: Läufer des Linearmotors 25
- 30: Erwärmungskavität
- 31: Hohlraum
- 32: erste Öffnung der Erwärmungskavität
- 33: Abschirmeinrichtung
- 34: zweite Öffnung
- 35: Verschlusseinrichtung
- 36: umlaufende Wandung
- 38: Bodenwandung/Bodenteil
- 38a: Ausnehmung
- 46: Dichtungseinrichtung
- 48: Träger
- 50: Anlage
- 52: Zuführeinrichtung
- 54: Zuführstern
- 55: Umformungseinrichtung
- 56: Umformungsstation
- 58: Träger
- 62: erste Wandung
- 64: zweite Wandung
- 66: Dichtungseinrichtung, Wasserschloss
- 76: Träger
- 82: Antrieb
- 84: Abtriebsrad
- 86: Zahnrad
- 85: Trägerstange
- 86: Dichtungseinrichtung, Faltenbalg
- 88: Läufer der zweiten Antriebseinrichtung 90
- 90: zweite Antriebseinrichtung, Elektromotor
- 91: Stator der zweiten Antriebseinrichtung
- 92: Gebläse
- 94: Filtereinrichtung
- 95: Gehäuse
- 96: Leitung
- L: Längsrichtung der Kunststoffvorformlinge
- P1 - P3: Bewegungsrichtungen
- D: Drehachse

## Patentansprüche

1. Vorrichtung (1) zum Erwärmen von Kunststoffvorformlingen (10) mit einem bewegbaren Träger (2), an dem wenigstens eine Erwärmungseinrichtung (20) angeordnet ist, wobei diese Erwärmungseinrichtung (20) ein Halteelement (22) zum Halten und Transportieren der Kunststoffvorformlinge (10) sowie eine Erwärmungskavität (30), in welche der Kunststoffvorformling (10) einführbar ist, aufweist und wobei eine Bewegungseinrichtung (24) vorgesehen ist, welche geeignet ist, den Kunststoffvorformling (10) in die Erwärmungskavität (30) einzuführen,
**dadurch gekennzeichnet, dass**
die Vorrichtung (1) einen Reinraum (6) aufweist, innerhalb dessen die Kunststoffvorformlinge (10) mittels der Erwärmungskavitäten (30) erwärmbar sind, wobei dieser Reinraum (6) von wenigstens einer ersten Wandung (62) und wenigstens einer zweiten Wandung (64), welche beweglich gegenüber der ersten Wandung (62) ausgeführt ist, gegenüber einer Umgebung (U) abgegrenzt ist.

2. Vorrichtung (1) nach Anspruch 1,
**dadurch gekennzeichnet, dass**
die Vorrichtung (1) einen stangenartigen Körper (8) aufweist, der wenigstens zeitweise während einer Erwärmung der Kunststoffvorformlinge (10) durch eine Mündung der Kunststoffvorformlinge (10) in deren Innenraum einführbar ist.

3. Vorrichtung (1) nach Anspruch 2,
**dadurch gekennzeichnet, dass**
der stangenartige Körper (8) erwärmbar ist.

4. Vorrichtung (1) nach wenigstens einem der vorangegangenen Ansprüche,
**dadurch gekennzeichnet, dass**
die Erwärmungskavität (30) eine erste Öffnung (32) aufweist, über welche der Kunststoffvorformling der Erwärmungskavitat (30) zuführbar ist, sowie wenigstens eine zweite Öffnung (34), welche von der ersten Öffnung (32) beabstandet ist.

5. Vorrichtung (1) nach Anspruch 4,
**dadurch gekennzeichnet, dass**
die Vorrichtung (1) eine Leitung (16, 18) zum Leiten eines fließfähigen Mediums aufweist, welche in Strömungsverbindung mit der zweiten Öffnung (34) bringbar ist.

6. Vorrichtung (1) nach wenigstens einem der vorangegangenen Ansprüche,
**dadurch gekennzeichnet, dass**
die Erwärmungskavität (30) eine den Kunststoffvorformling (10) in einer Umfangsrichtung vollständig umschließende Wandung (36) sowie eine Bodenwandung (38) aufweist.

7. Vorrichtung (1) nach Anspruch 6,
**dadurch gekennzeichnet, dass**
die Bodenwandung (38) gegenüber der vollständig umschließenden Wandung (36) beweglich ist.

8. Vorrichtung (1) nach wenigstens einem der vorangegangenen Ansprüche,
**dadurch gekennzeichnet, dass**
wenigstens ein Faltenbalg (46, 84) vorgesehen ist, um wenigstens eine in der Vorrichtung (1) auftretende Relativbewegung abzudichten.

9. Vorrichtung (1) nach wenigstens einem der vorangegangenen Ansprüche,
**dadurch gekennzeichnet, dass**
wenigstens eine Innenwandung (36, 38) der Erwärmungskavität (30) auf eine Temperatur erwärmbar ist, welche größer ist als 500 °C.

10. Vorrichtung (1) nach wenigstens einem der vorangegangenen Ansprüche,
**dadurch gekennzeichnet, dass**
das Halteelement (22) zum Halten der Kunststoffvorformlinge (10) wenigstens abschnittsweise als Hohlwelle ausgestaltet ist.

11. Verfahren zum Erwärmen von Kunststoffvorformlingen (10), wobei die Kunststoffvorformlinge (10) entlang eines vorgegebenen Transportpfades transportiert und während dieses Transports erwärmt werden, wobei die Kunststoffvorformlinge jeweils in Erwärmungskavitäten (30) eingeführt und in diesen Erwärmungskavitäten (30) erwärmt werden, so dass jeder zu erwärmende Kunststoffvorformling (10) einer Erwärmungskavität (30) zugeordnet ist und die Erwärmungskavitäten (30) wenigstens abschnittsweise entlang des Transportpfads bewegt werden, und zum Erwärmen der Kunststoffvorformlinge (10) wenigstens ein Abschnitt der Erwärmungskavität (30) beheizt wird und/oder Mikrowellen in die Erwärmungskavität eingebracht werden.
**dadurch gekennzeichnet, dass**
die Kunststoffvorformlinge (10) wenigstens zeitweise während ihrer Erwärmung innerhalb eines Reinraums (6) transportiert werden, wobei dieser Reinraum (6) von wenigstens einer ersten Wandung (62) und wenigstens einer zweiten Wandung (64), welche beweglich gegenüber der ersten Wandung (62) ausgeführt ist, gegenüber einer Umgebung abgegrenzt wird.

12. Verfahren nach Anspruch 11,
**dadurch gekennzeichnet, dass**
während des Erwärmungsvorgangs wenigstens zeitweise ein stangenförmiger Körper (8) in die Kunststoffvorformlinge (10) eingeführt wird.
